# EUROPEAN PATENT APPLICATION

(11) **EP 4 411 945 A1**
(43) Date of publication of application: **07.08.2024**
(21) Application number: 23219976.0
(22) Date of filing: 22.12.2023
(51) Int. Cl.: H01M 50/204, H01M 50/209, H01M 50/291, H01M 50/293

(54) **BATTERY MODULE AND METHOD OF MANUFACTURING SAME**

(30) Priority: 31.01.2023 JP 2023012613
(71) Applicant: Prime Planet Energy & Solutions, Inc., Chuo-ku Tokyo 103-0022 (JP)
(72) Inventor: OMURA, Tetsuji, Tokyo, 103-0022 (JP); MATSUTA, Shigeki, Tokyo, 103-0022 (JP); IWATA, Ryosuke, Tokyo, 103-0022 (JP)
(74) Representative: Kuhnen & Wacker Patent- und Rechtsanwaltsbüro PartG mbB

(57) **Abstract**

A battery module includes a plurality of battery cells (100) and a separator (400). The plurality of battery cells (100) are arranged in a first direction. The separator (400) is disposed between the plurality of battery cells (100). The separator (400) includes a foam (410) and an elastic body (420). The foam (410) is elastically deformable at least in the first direction. The elastic body (420) defines a closed space (10) in which the foam (410) is accommodated.

## Description

### CROSS REFERENCE TO RELATED APPLICATIONS

This nonprovisional application is based on Japanese Patent Application No. 2023-012613 filed on January 31, 2023 with the Japan Patent Office, the entire contents of which are hereby incorporated by reference.

### BACKGROUND OF THE INVENTION

### Field of the Invention

The present technology relates to a battery module and a method of manufacturing the battery module.

### Description of the Background Art

WO 2019/142645 is a prior art document that discloses a configuration of a power storage device. The power storage device described in WO 2019/142645 includes a secondary battery and a cushioning plate. The cushioning plate is in abutment with each of opposing side walls of the secondary battery. The cushioning plate includes a non-deformable portion and a deformable portion. The non-deformable portion is a portion that is not substantially deformed in response to a change in volume of the secondary battery. The non-deformable portion holds the secondary battery. The non-deformable portion is provided with a through hole or recess into which the deformable portion is fitted. The deformable portion is a portion that is elastically deformed in response to a change in volume of the secondary battery. The deformable portion absorbs the change in volume of the secondary battery.

### SUMMARY OF THE INVENTION

For improvement of a temperature characteristic of a separator disposed between a plurality of battery cells or the like, a foam may be used for a configuration of the separator. When the foam is elastically deformed in a compression direction due to expansion or the like of each of the plurality of battery cells, an increased pressure in a bubble portion inside the foam may be released to surroundings of the foam via the bubble portion. Thus, reaction force of the foam is decreased, with the result that reaction force of the separator may be decreased after the foam is elastically deformed in the compression direction.

The present technology has been made to solve the above-described problem and has an object to provide a battery module and a method of manufacturing the battery module so as to suppress a decrease in reaction force of a separator after a foam is elastically deformed in a compression direction.

The present technology provides the following battery module.
[1] A battery module comprising:
   a plurality of battery cells arranged in a first direction; and
   a separator disposed between the plurality of battery cells, wherein
   the separator includes
      a foam elastically deformable at least in the first direction, and
      an elastic body that defines a closed space in which the foam is accommodated.
   It should be noted that the expression "defines a closed space" includes: forming the closed space only by the elastic body; and forming the closed space by the elastic body and another member.
[2] The battery module according to [1], wherein the closed space is formed to be surrounded by two battery cells of the plurality of battery cells in the first direction and surrounded by the elastic body in a direction circumferential to the first direction.
[3] The battery module according to [1] or [2], wherein in a state in which the separator is detached from the battery module, a thickness of the elastic body in the first direction is thicker than a thickness of the foam in the first direction.
[4] The battery module according to [2] or [3], wherein in a state in which the separator is detached from the battery module, a product of an elastic modulus of the elastic body and a cross sectional area of the elastic body in the first direction is smaller than a product of an elastic modulus of the foam and a cross sectional area of the foam in the first direction.
[5] The battery module according to any one of [2] to [4], wherein the elastic body is adhered to the plurality of battery cells through an adhesive agent.
[6] The battery module according to any one of [1] to [5], wherein
   the elastic body has a main body portion provided with a recess that is opened in the first direction and that forms the closed space, and
   the foam is disposed inside the recess.
   The present technology provides the following method of manufacturing a battery module.
[7] A method of manufacturing a battery module, the method comprising:
   arranging a plurality of battery cells in a first direction; and
   disposing a separator between the plurality of battery cells, the separator including a foam elastically deformable at least in the first direction and an elastic body that defines a closed space in which the foam is accommodated.
[8] The method of manufacturing the battery module according to [7], further comprising preparing the separator, wherein
   the preparing of the separator includes disposing a foaming agent in the elastic body and foaming the foaming agent to form the foam, the disposing of the foaming agent in the elastic body includes disposing the foaming agent in a recess that is formed in the elastic body and that is opened in the first direction, and
   the foaming of the foaming agent includes foaming the foaming agent disposed in the recess.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a configuration of a battery module according to a first embodiment of the present technology.
Fig. 2 is a perspective view showing an internal configuration of the battery module according to the first embodiment of the present technology.
Fig. 3 is a perspective view showing a configuration of each battery cell included in the battery module according to the first embodiment of the present technology.
Fig. 4 is a transverse cross sectional view of the battery module of Fig. 2 when viewed in a direction of arrow of a line IV-IV.
Fig. 5 is a longitudinal cross sectional view of the battery module of Fig. 2 when viewed in a direction of arrow of a line V-V.
Fig. 6 is a longitudinal cross sectional view showing a configuration of a separator included in the battery module according to the first embodiment of the present technology before being assembled to the battery module.
Fig. 7 is a transverse cross sectional view showing the configuration of the separator included in the battery module according to the first embodiment of the present technology before being assembled to the battery module.
Fig. 8 is a flowchart showing a method of manufacturing the battery module according to the first embodiment of the present technology.
Fig. 9 is a transverse cross sectional view showing a configuration of a separator when a battery cell is expanded in a battery module according to a comparative example.
Fig. 10 is a longitudinal cross sectional view showing a configuration of a separator included in a battery module according to a second embodiment of the present technology.
Fig. 11 is a transverse cross sectional view of the separator of Fig. 10 when viewed in a direction of arrow of a line XI-XI.
Fig. 12 is a transverse cross sectional view showing a state in which a foam is formed from a foaming agent in the battery module according to the second embodiment of the present technology.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium ion battery. In the present specification, the term "electrode" may collectively represent a positive electrode and a negative electrode.

Further, the "battery module" can be mounted on vehicles such as a hybrid electric vehicle (HEV), a plug-in hybrid electric vehicle (PHEV), and a battery electric vehicle (BEV). It should be noted that the use of the "battery module" is not limited to the use in a vehicle.

It should be noted that in each of the figures, an X direction serving as a second direction is defined as a direction in which a positive electrode terminal and a negative electrode terminal of a battery cell are arranged, a Y direction serving as a first direction is defined as a direction in which a plurality of battery cells are arranged, and a Z direction serving as a third direction is defined as a height direction of the battery module. A cross sectional view of the battery module when viewed in the Y direction will be referred to as a longitudinal cross sectional view, and a cross sectional view of the battery module when viewed in the Z direction will be referred to as a transverse cross sectional view. Further, in order to facilitate understanding of the invention, the size of each configuration in the figures may be changed from the actual size thereof.

### (First Embodiment)

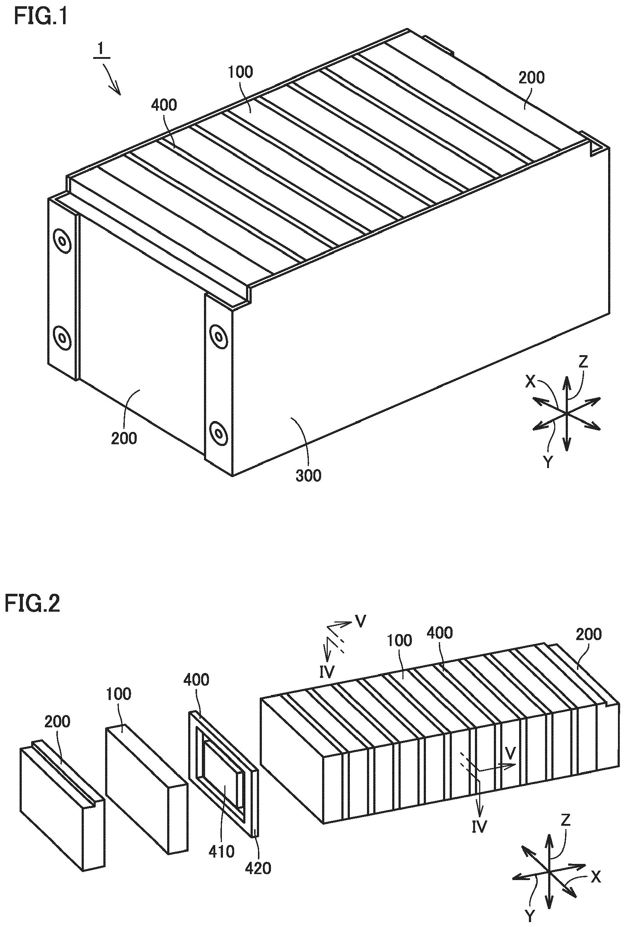

First, a configuration of a battery module according to a first embodiment of the present technology will be described. Fig. 1 is a perspective view showing a configuration of the battery module according to the first embodiment of the present technology. Fig. 2 is a perspective view showing an internal configuration of the battery module according to the first embodiment of the present technology.

As shown in Figs. 1 and 2, a battery module 1 according to the first embodiment of the present technology includes battery cells 100, end plates 200, restraint members 300, and separators 400.

The plurality of battery cells 100 are arranged side by side in the first direction (Y direction). Each separator 400 described below is interposed between battery cells 100. The plurality of battery cells 100, which are sandwiched between two end plates 200, are pressed by end plates 200, and are therefore restrained between two end plates 200.

End plates 200 are provided at both ends of the plurality of battery cells 100 in the first direction (Y direction). Each of end plates 200 is fixed to a base such as a housing that accommodates battery module 1. End plate 200 is composed of, for example, aluminum or iron.

As shown in Fig. 1, restraint members 300 are provided at both ends of the plurality of battery cells 100 and end plates 200 in the X direction. When each of restraint members 300 is engaged with end plates 200 with compressive force in the Y direction being applied to the plurality of stacked battery cells 100 and end plates 200 and then the compressive force is released, tensile force acts on restraint member 300 that connects two end plates 200. As a reaction thereto, restraint member 300 presses two end plates 200 in directions of bringing them closer to each other. As a result, restraint member 300 restrains the plurality of battery cells 100 in the Y direction.

Separator 400 is disposed between the plurality of battery cells 100. Separator 400 is in abutment with long side surfaces of the plurality of battery cells 100. Separator 400 has an insulation property. Thus, separator 400 insulates the plurality of battery cells 100 from each other. Details of separator 400 will be described later.

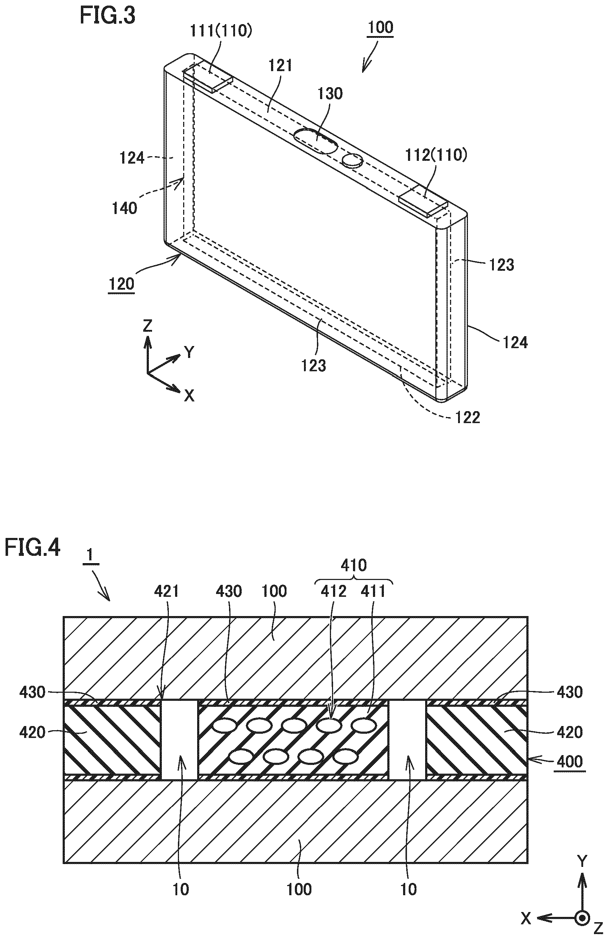

Fig. 3 is a perspective view showing a configuration of each battery cell included in the battery module according to the first embodiment of the present technology.

As shown in Fig. 3, battery cell 100 includes electrode terminals 110, a case body 120, a gas-discharge valve 130, and an electrode assembly 140.

Electrode terminals 110 have a positive electrode terminal 111 and a negative electrode terminal 112. Electrode terminals 110 are formed on case body 120.

Case body 120 is a container that accommodates electrode assembly 140 and an electrolyte solution. Case body 120 has a substantially rectangular parallelepiped shape. Case body 120 is composed of aluminum, an aluminum alloy, iron, an iron alloy, or the like.

Case body 120 has an upper surface 121, a lower surface 122, a pair of long side surfaces 123, and a pair of short side surfaces 124.

Electrode terminals 110 are disposed on upper surface 121. Lower surface 122 is opposite to upper surface 121 in the third direction (Z direction).

The pair of long side surfaces 123 and the pair of short side surfaces 124 constitute side surfaces of case body 120. The pair of long side surfaces 123 and the pair of short side surfaces 124 serving as the side surfaces of case body 120 intersect each of upper surface 121 and lower surface 122. The pair of long side surfaces 123 are opposite to each other in the first direction (Y direction) with electrode assembly 140 being interposed therebetween. The pair of short side surfaces 124 are opposite to each other in the second direction (X direction) with electrode assembly 140 being interposed therebetween. Each of the pair of long side surfaces 123 has a larger area than that of each of the pair of short side surfaces 124.

Gas-discharge valve 130 is fractured when pressure inside case body 120 becomes equal to or more than a predetermined value. Thus, gas in case body 120 is discharged to outside of case body 120.

Electrode assembly 140 functions as a power generation element. Electrode assembly 140 includes a positive electrode and a negative electrode (not shown). A substrate of the positive electrode is, for example, an aluminum alloy foil. A substrate of the negative electrode is, for example, a copper alloy foil. Electrode assembly 140 is, for example, a wound type electrode assembly in which the positive electrode and the negative electrode are wound or a stacked type electrode assembly in which the positive electrode and the negative electrode are alternately stacked.

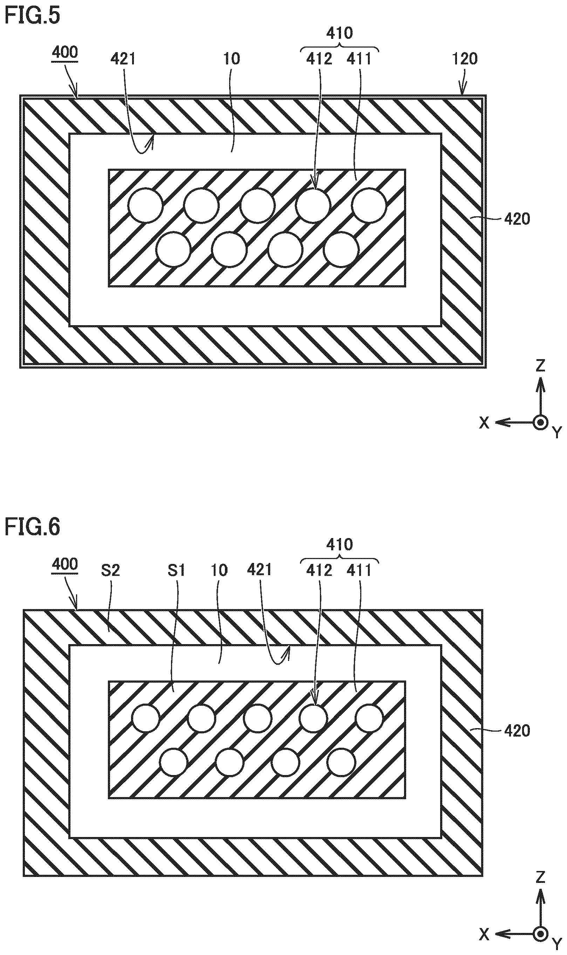

Fig. 4 is a transverse cross sectional view of the battery module of Fig. 2 when viewed in a direction of arrow of a line IV-IV. Fig. 5 is a longitudinal cross sectional view of the battery module of Fig. 2 when viewed in a direction of arrow of a line V-V.

As shown in Figs. 4 and 5, separator 400 according to the present embodiment includes a foam 410 and an elastic body 420. Battery module 1 according to the present embodiment further includes an adhesive agent 430.

Foam 410 is a portion of separator 400 that mainly receives pressing force caused by expansion of battery cell 100. Foam 410 is elastically deformable at least in the first direction (Y direction). Foam 410 according to the present embodiment is elastically deformable in any of the first to third directions.

Foam 410 is in abutment with battery cells 100 in the Y direction. Foam 410 in the present embodiment is in abutment with each of battery cells 100 with adhesive agent 430 being interposed therebetween. Foam 410 is adhered to battery cell 100 by adhesive agent 430.

Foam 410 is located substantially at the center of separator 400. Foam 410 is surrounded by elastic body 420 circumferentially with respect to the Y direction. Thus, foam 410 is accommodated in an inner space of elastic body 420. The position of foam 410 can be arbitrarily adjusted in the inner space of elastic body 420 by changing the position of foam 410 to be adhered to battery cell 100 using adhesive agent 430.

Foam 410 can be composed of, for example, a material having electrical insulation property and elasticity, such as a silicone rubber, a urethane rubber, or an ethylene propylene rubber (EPDM).

Foam 410 has a base portion 411 and a plurality of bubble portions 412. Base portion 411 is a portion that forms an outer shape of foam 410.

Base portion 411 is dotted with the plurality of bubble portions 412. Bubble portions 412 in the present embodiment have a continuous bubble structure. Thus, the plurality of bubble portions 412 communicate with each other. It should be noted that this continuous bubble structure is not shown in the figures in order to facilitate understanding of the invention. Further, not all the plurality of bubble portions 412 may necessarily communicate with each other.

It should be noted that foam 410 functions as a heat insulation material in addition to mainly receiving pressing force caused by expansion of battery cell 100. Foam 410 has an excellent heat insulation property by utilizing heat conductivity of air in the inner space of bubble portions 412. Therefore, when battery cell 100 generates heat, transfer of the heat from adjacent foam 410 to a configuration therearound can be suppressed.

Elastic body 420 is a frame body that surrounds foam 410 in a direction circumferential to the first direction (Y direction). It should be noted that elastic body 420 in the present embodiment is constituted of one member, but is not limited to this configuration. Elastic body 420 may be constituted of two or more members. When elastic body 420 is constituted of two or more members, the members are joined to each other by adhesion or the like.

Elastic body 420 in the present embodiment is elastically deformable in any of the first to third directions. Elastic body 420 is elastically deformable by receiving pressing force caused by expansion of battery cell 100.

Elastic body 420 is in abutment with battery cells 100 in the first direction (Y direction). Elastic body 420 in the present embodiment is adhered to each of the plurality of battery cells 100 through adhesive agent 430 and is in abutment with battery cell 100.

Elastic body 420 can be composed of, for example, a material having electrical insulation property and elasticity, such as a silicone rubber, a fluororubber, a urethane rubber, a natural rubber, a styrene-butadiene rubber, a butyl rubber, an ethylene propylene rubber (EPM or EPDM), a butadiene rubber, an isoprene rubber, a norbomene rubber, or the like.

Elastic body 420 according to the present embodiment is provided with a through hole 421 extending therethrough in the first direction (Y direction). Foam 410 is disposed inside through hole 421 with a clearance being interposed between foam 410 and elastic body 420.

Elastic body 420 defines a closed space 10 in which foam 410 is accommodated. The expression "defines a closed space 10" includes: forming closed space 10 only by elastic body 420; and forming closed space 10 by elastic body 420 and another member. The other member may be battery cell 100 or another member having elasticity. Further, foam 410 is surrounded by elastic body 420 circumferentially with respect to the first direction (Y direction), but may be surrounded by elastic body 420 in all the first to third directions.

Closed space 10 is formed to be surrounded by two battery cells 100 of the plurality of battery cells 100 in the first direction (Y direction) and surrounded by elastic body 420 in the direction circumferential to the first direction (Y direction). Closed space 10 in the present embodiment is formed to be surrounded by the long side surfaces of battery cells 100 and elastic body 420 with the long side surfaces of battery cells 100 and elastic body 420 being adhered together by adhesive agent 430. Adhesive agent 430 may be provided on all the surfaces (both surfaces) at which foam 410 and elastic body 420 are in abutment with battery cells 100, or may be provided only on any surface (one surface) at which foam 410 and elastic body 420 are in abutment with battery cell 100. Further, for example, adhesive agent 430 may be provided on both surfaces of elastic body 420, and the adhesive agent may be provided on one surface of foam 410. When adhesive agent 430 is provided on only one surface of each of foam 410 and elastic body 420, relative positioning thereof with respect to battery cell 100 is facilitated in assembling the battery module by providing adhesive agent 430 on the surfaces of foam 410 and elastic body 420 in the same direction.

When separator 400 is pressed by pressing force caused by expansion of battery cell 100 to elastically deform foam 410 and elastic body 420 in a compression direction in the first direction (Y direction), the volume of closed space 10 becomes smaller than that before they are elastically deformed.

Fig. 6 is a longitudinal cross sectional view showing the configuration of the separator included in the battery module according to the first embodiment of the present technology before being assembled to the battery module.

As shown in Fig. 6, in a state in which separator 400 is detached from the battery module, a product of an elastic modulus of elastic body 420 and a cross sectional area S2 of elastic body 420 in the first direction (Y direction) is smaller than a product of an elastic modulus of foam 410 and a cross sectional area S1 of foam 410 in the first direction (Y direction). With this relation between the products of the elastic moduli and the cross sectional areas, elastic body 420 is more likely to be elastically deformed than foam 410.

The elastic modulus of foam 410 is, for example, 1 MPa or more and 10 MPa or less. The elastic modulus is defined, for example, as follows. A test piece of the foam with a square shape having each side of 5 cm is used to obtain a load displacement curve (FS curve). As a test condition, the foam is fed with a pressure to 3.9 MPa at a pressure application rate of 30 N/min. The elastic modulus is calculated from the slope of the FS curve in such a range that the compression ratio of the foam is 1% to 20%. After the test described above, the applied pressure is released, which is followed by resting for 2 hours, and then the thickness of the foam is measured using a micrometer. A condition for the elastic modulus of foam 410 is such that a change in thickness of the foam after the test is 20% or less with respect to the thickness of the foam before the test. The elastic modulus of the elastic body can be also calculated in the same manner as described above.

Cross sectional area S1 of foam 410 in the first direction (Y direction) is, for example, 65% or more and 120% or less of the cross sectional area of the electrode assembly in the first direction (Y direction). Since cross sectional area S1 of foam 410 in the first direction (Y direction) may be changed depending on the position of the cross section, it is desirable to use, for example, a cross sectional area with a minimum value from cross sectional areas calculated from a plurality of longitudinal cross sections of foam 410 when specifying the cross sectional area of foam 410.

The elastic modulus of elastic body 420 is set so as to satisfy the above-described relation between the products of the elastic moduli and the cross sectional areas. That is, it is desirable to define the elastic modulus of foam 410, cross sectional area S1 of foam 410 in the first direction (Y direction), and cross sectional area S2 of elastic body 420 in the first direction (Y direction), and then define the elastic modulus of elastic body 420 so as to satisfy the above-described relation between the products of the elastic moduli and the cross sectional areas.

Cross sectional area S2 of elastic body 420 in the first direction (Y direction) is, for example, 3% or more and 30% or less of the outer shape area of the case body when viewed in the first direction (Y direction). Since foam 410 serves as the portion that mainly receives pressing force caused by expansion of battery cell 100, cross sectional area S2 of elastic body 420 in the first direction (Y direction) is desirably smaller than a value obtained by dividing, by the elastic modulus of the elastic body, the product of cross sectional area S1 of foam 410 in the first direction (Y direction) and the elastic modulus of foam 410.

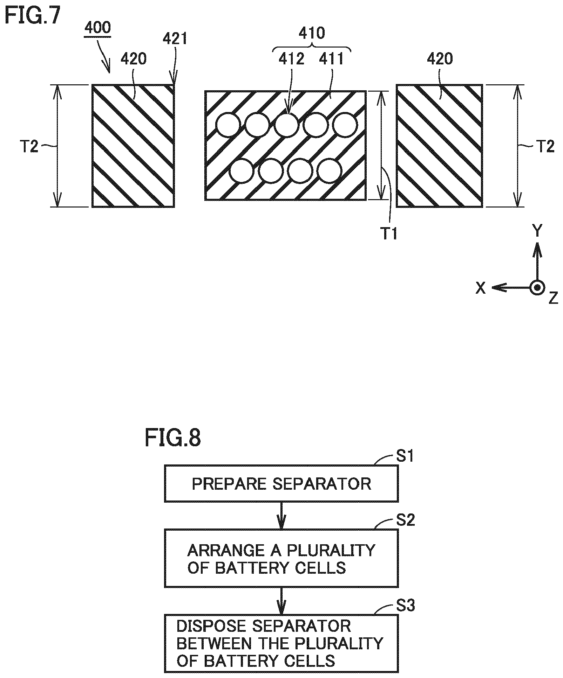

Fig. 7 is a transverse cross sectional view showing the configuration of the separator included in the battery module according to the first embodiment of the present technology before being assembled to the battery module.

As shown in Fig. 7, in a state in which separator 400 is detached from the battery module, a thickness T2 of elastic body 420 in the first direction (Y direction) is thicker than a thickness T1 of foam 410 in the first direction (Y direction). Thus, since foam 410 is suppressed from being bulky in the inner space of elastic body 420, closed space 10 is readily secured when assembling separator 400 to battery module 1.

Thickness T1 of foam 410 in the first direction (Y direction) is, for example, 3% or more and 17% or less with respect to the thickness of the battery cell in the first direction (Y direction). Thickness T2 of elastic body 420 in the first direction (Y direction) is, for example, 3% or more and 25% or less with respect to the thickness of the battery cell in the first direction (Y direction).

Next, a method of manufacturing battery module 1 according to the first embodiment of the present technology will be described. Fig. 8 is a flowchart showing the method of manufacturing the battery module according to the first embodiment of the present technology. It should be noted that a method of assembling each of configurations other than battery cell 100 and separator 400 will not be described.

As shown in Fig. 8, in the method of manufacturing battery module 1 according to the first embodiment of the present technology, first, separator 400 is prepared (step S1). A method of shaping separator 400 is not limited. In separator 400, the foam may be disposed in the inner space of the elastic body after being cut to a size with which the foam can be accommodated inside the elastic body, or the foam may be formed by disposing a below-described foaming agent in the inner space of the elastic body and foaming the foaming agent.

Next, the plurality of battery cells 100 are arranged in the first direction (Y direction) (step S2). The plurality of battery cells 100 are arranged in the first direction (Y direction) with a clearance being interposed therebetween.

Next, separator 400 is disposed between the plurality of battery cells 100 (step S3). Specifically, separator 400 including foam 410 elastically deformable at least in the first direction (Y direction) and elastic body 420 defining closed space 10 in which foam 410 is accommodated is disposed between the plurality of battery cells 100. In the present embodiment, separator 400 is adhered to battery cell 100 by adhesive agent 430.

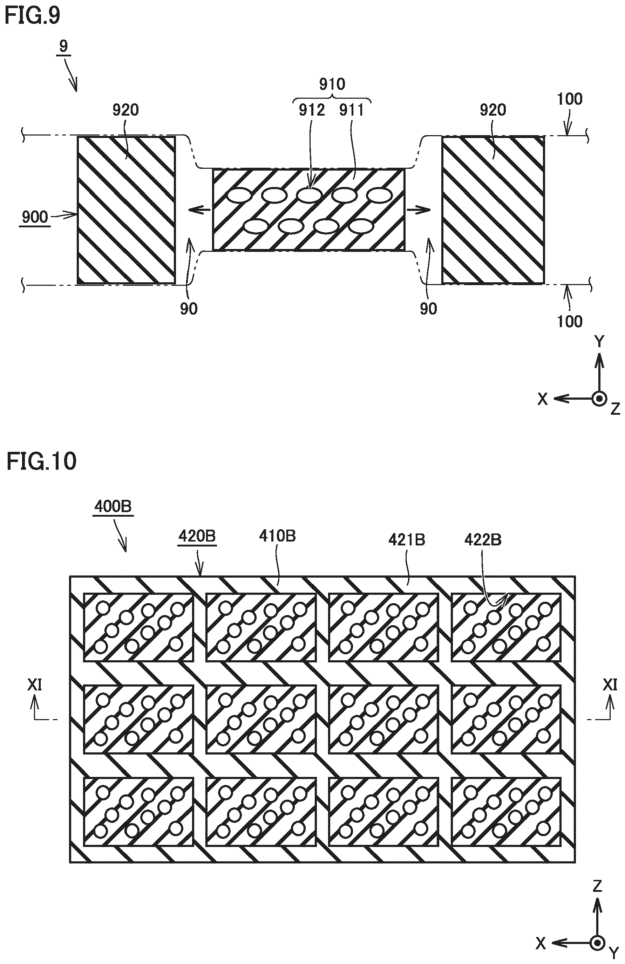

Here, a configuration of a battery module according to a comparative example will be described. Fig. 9 is a transverse cross sectional view showing a configuration of a separator when a battery cell is expanded in the battery module according to the comparative example.

As shown in Fig. 9, a battery module 9 according to the comparative example includes battery cells 100 and a separator 900. Separator 900 includes a first member 910 and a second member 920.

First member 910 is a foam elastically deformable in the first direction (Y direction) by pressing force caused by expansion of battery cell 100. Second member 920 is a member having a strength such that substantially no elastic deformation is caused by pressing force caused by expansion of battery cell 100.

First member 910 has a base portion 911 and bubble portions 912. Bubble portions 912 have a continuous bubble structure. Each of bubble portions 912 receives pressing force caused by expansion of battery cell 100 to compress an inner space thereof, thus resulting in a high pressure therein.

Second member 920 defines a closed space 90 in which first member 910 is accommodated. Second member 920 is not deformed by pressing force from battery cell 100. Therefore, the volume of closed space 90 is less likely to become smaller than that before receiving the pressing force from battery cell 100. Thus, the pressure of closed space 90 is lower than the pressure of the inner space of bubble portion 912. Since bubble portions 912 having the continuous bubble structure communicate with closed space 90, the pressure of the inner space of each bubble portion 912 is released to closed space 90 on the low pressure side in order to maintain the equilibrium state.

In a state in which first member 910 is compressed by receiving the pressing force from battery cell 100, the pressure of the inner space of bubble portion 912 is released to closed space 90 (in directions of arrows in Fig. 9), thereby decreasing the pressure of the inner space of bubble portion 912. Thus, reaction force of first member 910 against the expansion of battery cell 100 is decreased. This leads to decreased reaction force of separator 900.

On the other hand, in separator 400 according to the present embodiment, as shown in Figs. 4 and 5, each of foam 410 and elastic body 420 is elastically deformed in response to receiving the pressing force from battery cell 100. Therefore, in response to the expansion of battery cell 100, the volume of closed space 10 becomes smaller than that before receiving the pressing force from battery cell 100.

As the volume of closed space 10 becomes smaller, the pressure inside closed space 10 becomes higher. Specifically, the pressure inside closed space 10 becomes comparable to the pressure of the inner space of each bubble portion 412 in foam 410. Bubble portions 412 having the continuous bubble structure communicate with closed space 10, but a pressure difference between closed space 10 and the inner space of each bubble portion 412 is smaller than that in the comparative example, with the result that the pressure of the inner space of bubble portion 412 is suppressed from being released to closed space 10. Thus, the pressure of the inner space of bubble portion 412 is suppressed from being decreased, thereby suppressing decreased reaction force of foam 410 against the expansion of battery cell 100. This leads to suppression of decreased reaction force of separator 400.

In each of battery module 1 and the method of manufacturing battery module 1 according to the first embodiment of the present technology, when foam 410 and elastic body 420 of separator 400 are elastically deformed in the compression direction due to separator 400 receiving pressing force caused by expansion of battery cell 100, the inside of foam 410 and closed space 10 around foam 410 can be compressed to increase the pressure because foam 410 is accommodated in closed space 10 formed by elastic body 420. Therefore, even when the pressure of the inner space of foam 410 is increased in response to the elastic deformation of foam 410 in the compression direction, the pressure is suppressed from being released to closed space 10 around foam 410, thereby suppressing decreased reaction force of foam 410. Thus, a decrease in the reaction force of separator 400 after foam 410 is elastically deformed in the compression direction can be suppressed.

In each of battery module 1 and the method of manufacturing battery module 1 according to the first embodiment of the present technology, since foam 410 is used in separator 400 and the inner space is provided in elastic body 420, the heat conductivity of separator 400 can be made low by utilizing the heat conductivity of air, with the result that the reaction force of separator 400 can be suppressed from being decreased in response to an increased temperature of separator 400 due to the use of battery module 1 as compared with a case where an elastic body having no bubble portion is used for a whole of the separator.

In battery module 1 according to the first embodiment of the present technology, closed space 10 is formed to be surrounded by two battery cells 100 of the plurality of battery cells 100 in the first direction (Y direction) and surrounded by elastic body 420 in the direction circumferential to the first direction (Y direction). Thus, when disposing foam 410 inside elastic body 420, foam 410 can be readily inserted into elastic body 420 via through hole 421.

In battery module 1 according to the first embodiment of the present technology, since thickness T2 of elastic body 420 is thicker than thickness T1 of the foam, foam 410 is not bulky in the inner space of through hole 421 of elastic body 420, with the result that closed space 10 can be readily secured.

In battery module 1 according to the first embodiment of the present technology, in the state in which separator 400 is detached from battery module 1, the product of the elastic modulus of elastic body 420 and cross sectional area S2 of elastic body 420 in the first direction (Y direction) is smaller than the product of the elastic modulus of foam 410 and cross sectional area S1 of foam 410 in the first direction (Y direction), with the result that elastic body 420 can be more likely to be elastically deformed than foam 410. Thus, closed space 10 formed by elastic body 420 can be compressed and closed readily.

In battery module 1 according to the first embodiment of the present technology, since elastic body 420 is adhered to battery cell 100 through adhesive agent 430, air is less likely to leak from between elastic body 420 and the long side surface of battery cell 100. This is because it is possible to prevent elastic body 420 from being expanded due to the internal pressure of closed space 10 and being deviated from long side surface 123 of battery cell 100 to decrease the pressure. As a result, the closed state and high-pressure state of closed space 10 can be readily secured. Further, by adhering foam 410 using adhesive agent 430, positioning can be facilitated during assembling.

### (Second Embodiment)

The following describes a battery module and a method of manufacturing the battery module according to a second embodiment of the present technology. Since the battery module and the method of manufacturing the battery module according to the second embodiment of the present technology are different from battery module 1 and the method of manufacturing battery module 1 according to the first embodiment of the present technology in terms of the configuration of the separator and the method of manufacturing the foam, the same configurations as those in battery module 1 and the method of manufacturing battery module 1 according to the first embodiment of the present technology will not be described repeatedly.

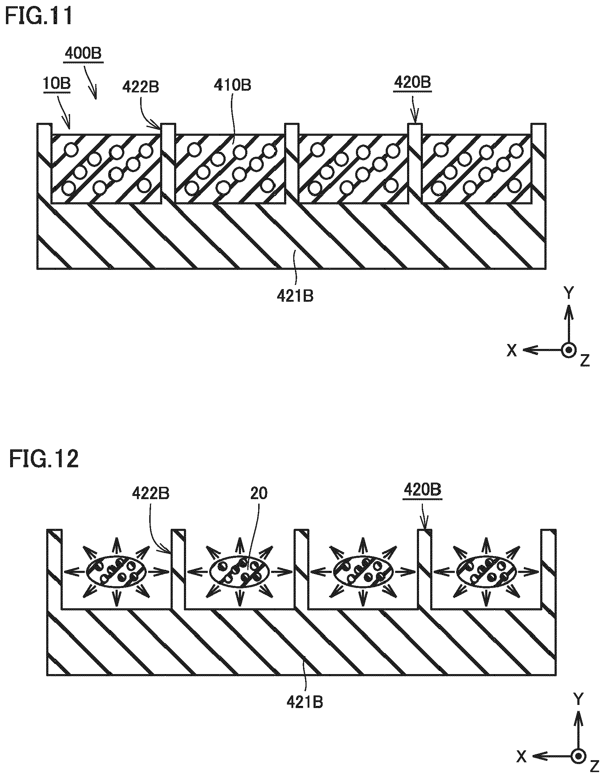

Fig. 10 is a longitudinal cross sectional view showing the configuration of the separator included in the battery module according to the second embodiment of the present technology. Fig. 11 is a transverse cross sectional view of the separator of Fig. 10 when viewed in a direction of arrow of a line XI-XI.

As shown in Figs. 10 and 11, the battery module according to the second embodiment of the present technology includes battery cells, end plates, restraint members, and a separator 400B. Separator 400B includes foams 410B and an elastic body 420B.

Elastic body 420B has a main body portion 421B. Main body portion 421B is provided with a plurality of recesses 422B. Foams 410B are disposed inside the plurality of recesses 422B. It should be noted that one recess 422B may be provided.

Each of the plurality of recesses 422B are opened in the first direction (Y direction) to form a closed space 10B. Closed space 10B is formed in such a manner that five of six sides of the space are surrounded by recess 422B and the remaining one side is surrounded by the long side surface of the battery cell.

Fig. 12 is a transverse cross sectional view showing a state in which the foam is formed from a foaming agent in the battery module according to the second embodiment of the present technology.

As shown in Fig. 12, in a step of preparing separator 400B of the battery module according to the second embodiment of the present technology, foaming agents 20 are disposed in elastic body 420B. Specifically, foaming agents 20 are disposed inside the plurality of recesses 422B.

Foaming agent 20 yet to be foamed and disposed in each recess 422B is foamed to form foam 410B. Thus, foam 410B is disposed in recess 422B of elastic body 420B. The foam formed by the foaming of foaming agent 20 is in close contact with recess 422B. It should be noted that the plurality of recesses 422B are disposed, but one recess 422B may be disposed. In this case, an occupation ratio of recess 422B is desirably higher than that of the main body portion in order to secure a heat insulation property readily.

In each of the battery module and the method of manufacturing the battery module according to the second embodiment of the present technology, as with the first embodiment, the reaction force of foam 410B can be suppressed from being decreased. Thus, the reaction force of separator 400B can be suppressed from being decreased after foam 410B is elastically deformed in the compression direction.

In the battery module according to the second embodiment of the present technology, since the five sides of the six sides of closed space 10B can be surrounded by elastic body 420B, closed space 10B having high hermeticity can be formed as compared with the case where the closed space is formed by providing a through hole in the elastic body.

In the method of manufacturing the battery module according to the second embodiment of the present technology, since foaming agent 20 disposed inside elastic body 420B is foamed to form foam 410B, a shaping step such as cutting of foam 410B can be omitted, thereby efficiently manufacturing separator 400B in which foam 410B is disposed in the inner space of elastic body 420B. This is because the disposing of foam 410B is completed with excellent positional precision at the time of foaming to form foam 410B inside recess 422B located at a determined position of elastic body 420B. That is, an assembling process of disposing it can be omitted.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery module (1) comprising:
a plurality of battery cells (100) arranged in a first direction; and
a separator (400) disposed between the plurality of battery cells (100), wherein
the separator (400) includes
a foam (410) elastically deformable at least in the first direction, and
an elastic body (420) that defines a closed space (10) in which the foam (410) is accommodated.

2. The battery module (1) according to claim 1, wherein the closed space (10) is formed to be surrounded by two battery cells (100) of the plurality of battery cells (100) in the first direction and surrounded by the elastic body (420) in a direction circumferential to the first direction.

3. The battery module (1) according to claim 1 or 2, wherein in a state in which the separator (400) is detached from the battery module (1), a thickness (T2) of the elastic body (420) in the first direction is thicker than a thickness (T1) of the foam (410) in the first direction.

4. The battery module (1) according to claim 2 or 3, wherein in a state in which the separator (400) is detached from the battery module (1), a product of an elastic modulus of the elastic body (420) and a cross sectional area (S2) of the elastic body (420) in the first direction is smaller than a product of an elastic modulus of the foam (410) and a cross sectional area (S1) of the foam (410) in the first direction.

5. The battery module (1) according to any one of claims 2 to 4, wherein the elastic body (420) is adhered to the plurality of battery cells (100) through an adhesive agent (430).

6. The battery module according to any one of claims 1 to 5, wherein
the elastic body (420B) has a main body portion (421B) provided with a recess (422B) that is opened in the first direction and that forms the closed space (10B), and
the foam (410B) is disposed inside the recess (422B).

7. A method of manufacturing a battery module, the method comprising:
arranging a plurality of battery cells (100) in a first direction; and
disposing a separator (400) between the plurality of battery cells (100), the separator (400) including a foam (410) elastically deformable at least in the first direction and an elastic body (420) that defines a closed space (10) in which the foam (410) is accommodated.

8. The method of manufacturing the battery module according to claim 7, further comprising preparing the separator (400B), wherein
the preparing of the separator (400B) includes disposing a foaming agent (20) in the elastic body (420B) and foaming the foaming agent (20) to form the foam (410B),
the disposing of the foaming agent (20) in the elastic body (420B) includes disposing the foaming agent (20) in a recess (422B) that is formed in the elastic body (420B) and that is opened in the first direction, and
the foaming of the foaming agent (20) includes foaming the foaming agent (20) disposed in the recess (422B).
